# EUROPEAN PATENT APPLICATION

(11) **EP 2 293 511 A1**
(43) Date of publication of application: **09.03.2011**
(21) Application number: 10275067.6
(22) Date of filing: 24.06.2010
(51) Int. Cl.: H04L 29/06

(54) **A method for real-time remote presentation and control of a visual page from a mobile terminal during a video call**

(30) Priority: 25.06.2009 IL 19956209
(71) Applicant: Searcher Mobile Ltd., 53583 Givatayim (IL)
(72) Inventor: Winkler, Yair, 30889, Keysaria (IL)
(74) Representative: Ahmad, Sheikh Shakeel

(57) **Abstract**

A method for an application server at a remote window source for real-time remote capture, presentation and control of a visual window source created from a calling subscriber's mobile terminal during a video call is described. The method includes performing the call, displaying the remote window, capturing the remote window by a Window Capture module in real-time and analyzing an interactive input event initiated by the calling subscriber and sending back to the subscriber's mobile phone in encoded video call format. The method also includes waiting by an application instance at the remote window for the input event by the calling subscriber, initiating the input event and acting by the application server on the remote window, accordingly, such that the remote window produces a new window presentation which is captured in real time and transmitted and presented to the calling subscriber during a video call.

## Description

### FIELD OF THE INVENTION

The present invention relates generally to phone technology, and more particularly, to a method for real-time remote presentation and control of a visual page from remote server to a mobile terminal during a video call.

### BACKGROUND OF THE INVENTION

Current technology allows a pair of terminals to be available to each other via a "secured tunnel," which has been established between the two (2) terminals, one being the host and the other being a remote terminal. The access is available only by means of secured clients on both terminal sites. Remote terminal functionality is available, however, on non-mobile terminals in general, or on a mobile terminal, by means of Web protocols. Still, on all applications, a client is a must for secured data transformation at both the remote terminal, as well at the host terminal.

Thus, it would be advantageous to enable mobile remote access without the need for a secured tunnel and client at the endpoint terminal and to enable mobile phone subscribers, during a video call, to remotely receive a presentation of a visual page to a remote endpoint terminal, and to interact with it.

### SUMMARY OF THE INVENTION

Accordingly, it is principal object of the present invention to capture in real time, a **page window** or part of the window page running on a host server or a PC terminal, and encode and transfer the frames over a mobile network to a remote mobile terminal during a video call.

It is another principal of the present invention to enable a mobile terminal to **remotely interact** with a **window,** e.g., by means of buttons, links or banners appearing in the window running on a remote server or a PC terminal, and interact with input events such as DTMF, Voice events, touch screens, camera input events and motion sensor events received from the mobile terminal during a video call.

A method is disclosed for an Application server at a remote window source to provide real-time remote presentation and control of a visual page from a calling subscriber's mobile terminal during a video call. The method includes performing a video call by the calling subscriber to the Application server, displaying the remote window at one of a remote server and a remote PC by the server, according to the caller information of the calling subscriber, capturing the remote window by a Window Capture module in real-time and analyzing the buttons/links of the remote window by a Window Input and Translate module for an interactive input event initiated by the calling subscriber terminal endpoint and sending back to the subscriber's mobile phone in encoded format. The method also includes waiting by an Application instance at the remote window source site for the input event by the calling subscriber, initiating the input event by the calling subscriber and acting by the Application server on the remote window, accordingly, such that the remote window produces a new window presentation which is captured and transmitted to the calling subscriber as a remote window presentation.

Accordingly, it is principle object of the present invention to **remotely present,** in real time, a URL or URI window page which is running on a remote server or a pc terminal, by capturing the URL window or part of the window page a number of frames/seconds, e.g. 25, encode the frames and transfer the frames over the network to the endpoint mobile terminal during a video call.

It is another principle of the present invention to **remotely interact** with the URL or URI window e.g. buttons or links or banners within the remote window which is running on a remote server or a pc terminal, using input events such as DTMF, Voice events, touch screens, Camera input events and motion sensors events arrived from the mobile endpoint terminal during a video call.

The present invention enables real-time presentation of a visual remote window to a subscriber's mobile phone terminal and is responsive to the subscriber's inputs. Real-time subscriber interaction is enabled for each time fragment, according to the analysis of each input event received from the subscriber's mobile handset.

A method is disclosed for real-time processing of a remote window presented on a subscriber mobile terminal during a video call. The method enables the subscriber to remotely view and interact with the window directly, without login or a secured access tunnel to that window. Furthermore, the subscriber will be able to remotely navigate the window page using input events from the mobile terminal during the video call, e.g. by pressing a button, link or keypad digit using DTMF.

When the subscriber is connected to the server the server is running a window on a remote server or a desktop, e.g. a URL window. The window is captured using a real-time frame grabber, which captures a number of frames/seconds. During a video call the frames are encapsulated into the network needed encoding, e.g. H.623 or H.624 and sent to the subscriber mobile terminal at the mobile network, via the 3G gateway. This method enables remote viewing, management and control at remote windows, whether at a remote server or at remote PC.

Capturing the frames and sending them to the mobile client enables communication with no need for secured tunneling, a local client at the mobile endpoint terminal or registration. Furthermore, analysis of a remote window's button links is enabled, as well as translating and mapping them to mobile endpoint terminal input events, with no need for security access and interaction is enabled without security overhead.

According to another aspect of the present invention there is provided A system for an Application server at a remote window source to provide real-time remote presentation of a real-time transaction and control of a visual window source from a calling subscriber's mobile terminal during a video call, said system comprising: a signaling and control system to coordinate processing of the subscriber's mobile terminal input events corresponding to activities relating to at least one of remote window buttons, links, text input and numbers; and an event analyzer to analyze said window source buttons, link, text, numbers matched with input events from the subscriber's mobile terminal, such that said remote window source produces a new window presentation which is captured and transmitted to the calling subscriber as a remote window presentation in real time and at 1-30 frames / sec.

### Acronyms:

### 3rd Generation Partnership Project (3GPP)

**Base Station Controller (BSC) -** The part of the wireless system's infrastructure that controls one or multiple cell sites' radio signals, thus reducing the load on the switch. The BSC performs radio signal management functions for base transceiver stations, managing functions such as frequency assignment and handoff.

**Base Transceiver Station (BTS) -** The name for the antenna and radio equipment necessary to provide wireless service in an area. BTS is also called a base station or cell site.

**Global Standard for Mobile Communication (GSM)** is currently the most popular wireless voice technology. GSM provides higher digital voice quality and low cost alternatives to making calls, such as the Short message service (SMS), also called "text messaging." **ISDN User Part (ISUP) -** A part of the SS7 protocol that defines call setup messages and calls.

**Service Control Point (SCP)** is the node in the common channel signaling network to which informational requests for service handling, such as routing, are directed and processed. The SCP is a real time database system that, based on a query from a service switching point (SSP) and via a signaling transfer point (STP), performs subscriber or application-specific service logic; then sends instructions back to the service switching point on how to continue call processing.

**Signaling Interface Protocol (SIP)** a protocol used for VOIP calls.

**Universal Mobile Telecommunications System (UMTS)** is a third-generation (3G), GSM-based wireless data technology, used to access the internet on mobile phones. UMTS allows users to download websites, pictures, and various forms of media over the internet, at speeds of up to 2 Mbps.

**Uniform Resource Locator (URL)** is the address for a resource or site (usually a directory or file) on the Internet. A URL is an example of a URI.

**Uniform Resource Identifier (URI)** is a generic term for how objects (Webpages, files) on the web are referred to. Examples of URI include internet protocol (IP) names and website addresses.

**Virtual Private Network (VPN)** is a private network within a public network, usually on the Internet. Privacy for the virtual network is achieved through encryption and provides a less expensive option than using dedicated lines.

**VPN Tunnel** is a connection between two or more private nodes or local area networks (LAN's) over a public network, typically the Internet. Encryption is used to maintain the confidentiality of private data when traveling over the Internet.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

For a better understanding of the invention with regard to the embodiments thereof, reference is now made to the accompanying drawings, in which like numerals designate corresponding elements or sections throughout, and in which:
Fig. 1 is a flow diagram of the visual remote window, demonstrating, constructed in accordance with the principles of the present invention;
Fig. 2 is a schematic illustration of a visual remote window, implementation on a UMTS network, constructed in accordance with the principles of the present invention; and
Fig. 3 is a schematic illustration of the logical steps, performed in accordance with the principles of the present invention.

### DETAILED DESCRIPTION OF AN EXEMPLARY EMBODIMENT

The principles and operation of a method and an apparatus according to the present invention may be better understood with reference to the drawings and the accompanying description, it being understood that these drawings are given for illustrative purposes only and are not meant to be limiting.

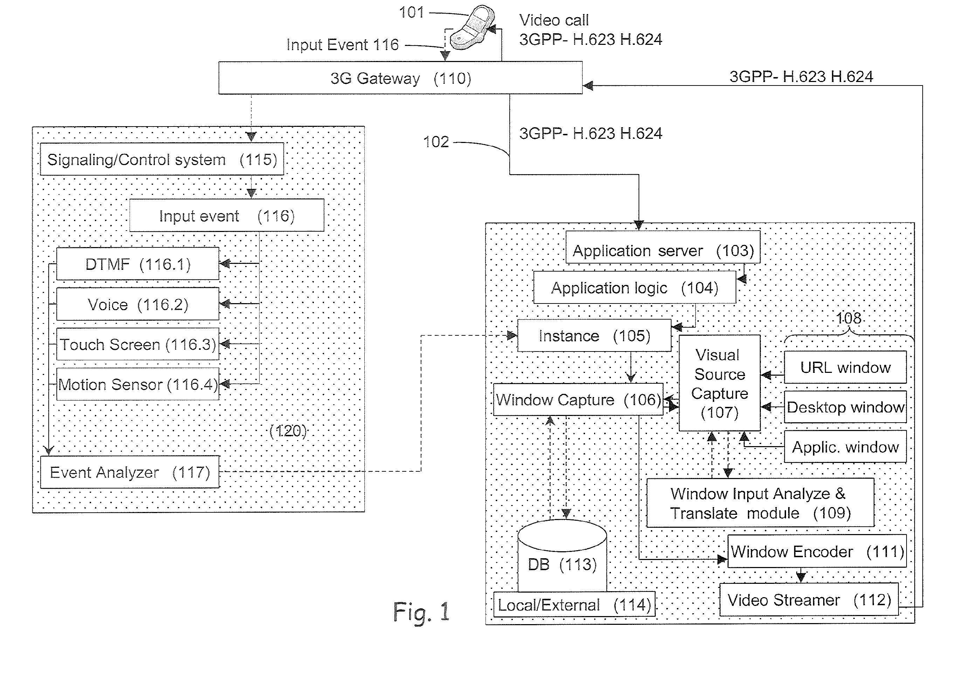

Fig. 1 is a flow diagram of the visual remote window, demonstrating, constructed in accordance with the principles of the present invention. A subscriber using a mobile phone 101 is connected to the application server using a video call 102 via a 3G Gateway 110. The Application server 103 uses application logic 104 to produce an instance 105 to handle the current call. According to the call information, subscriber ID or service number application instance 105 will open a remote Visual Source Capture module 107, e.g. a URL window at the remote server or desktop 108 received from a Window Capture module 106, in conjunction with a database 113 and local and/or external sources. The Window Encoder 111 encodes the next video frame according to the destination network and the Video Streamer 112 sends the next video frame to the 3G Gateway 110.

Window Capture module 106 will capture the opened window at 15 - 25 frames/seconds, for example, for real time action. Window instance 105 will also analyze and translate 109 the remote window buttons, links, text input or numbers to be applied remotely from the subscriber remote (endpoint) terminal 120 using various input events, as analyzed by event analyzer 117.

Subscriber at his mobile phone 101 will produce input events 116, accordingly such as DTMF 116.1, Voice 116.2, touch screen 116.3, motion sensor 116.4 or others. The application instance will translate the input events and will emulate the action at the remote window, e.g. URL window. The Visual Source capture module 107, e.g. URL window 108 will respond to the input event received from the subscriber (endpoint) terminal accordingly, and this will affect the window content accordingly. The new window content of the remote window will be captured and transmitted to the subscriber (endpoint) handset terminal in a loop.

Thus, subscriber will be able to act on a remote window source directly via its 3G mobile terminal during a video call and without a secured tunnel or client

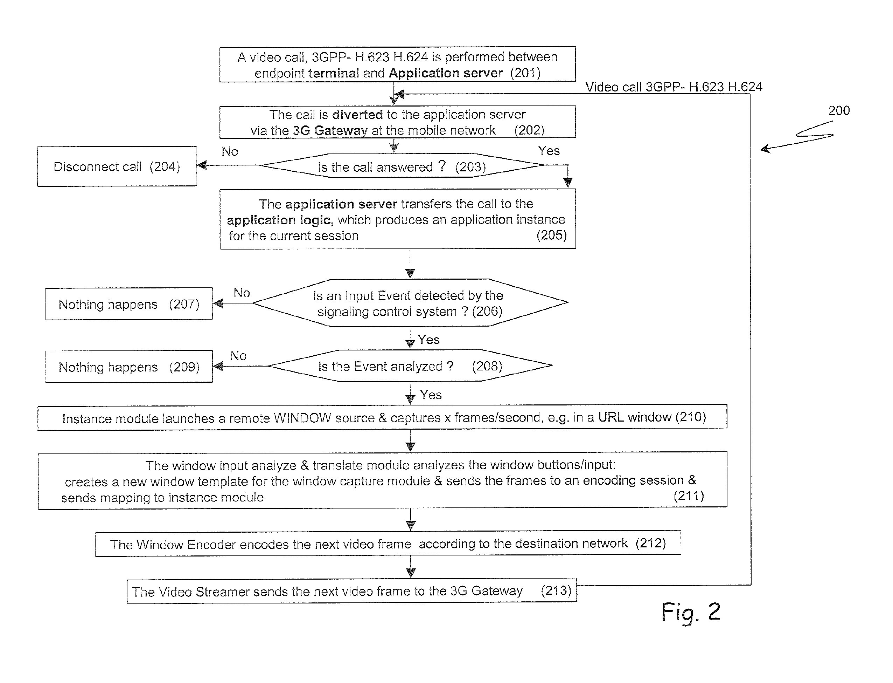

Fig. 2 is a schematic illustration of an IN solution of an IN Implementation on a 3G video call e.g. UMTS network, constructed in accordance with the principles of the present invention.

A video call, e.g. 3GPP-H.623 H.624 is performed between endpoint **terminal** and **Application server** 201. The call is **diverted** to the application server via the **3G Gateway** at the mobile network 202. If the call is not answered 203, disconnect the call 204. If the call is answered 203, the **application server** transfers the call to the **application logic,** which produces an application instance for the current session 205.

If an Input Event detected by the signaling control system 206 and the input event is analyzed 208, then operation continues as below in reference block 210. Operation continues with 207, 208, etc. If an Input Event is not detected by the signaling control system 206 or the input event is not yet analyzed 208, then nothing happens 207, 209.

Next, the instance module launches a remote WINDOW source and captures x frames/second, e.g. in a URL window 210. Then the window input analyze & translate module analyzes the window buttons/input. It creates a new window template for the window capture module & sends the frames to an encoding session and sends mapping to instance module 211. Next, the Window Encoder encodes the next video frame according to the destination network 212 and the Video Streamer sends the next video frame to the 3G Gateway 213, back to the endpoint terminal of the subscriber and another call (Video call 3GPP- H.623 H.624) is **diverted** to the application server via the **3G Gateway** at the mobile network 202 (then continue 203, 204, etc.).

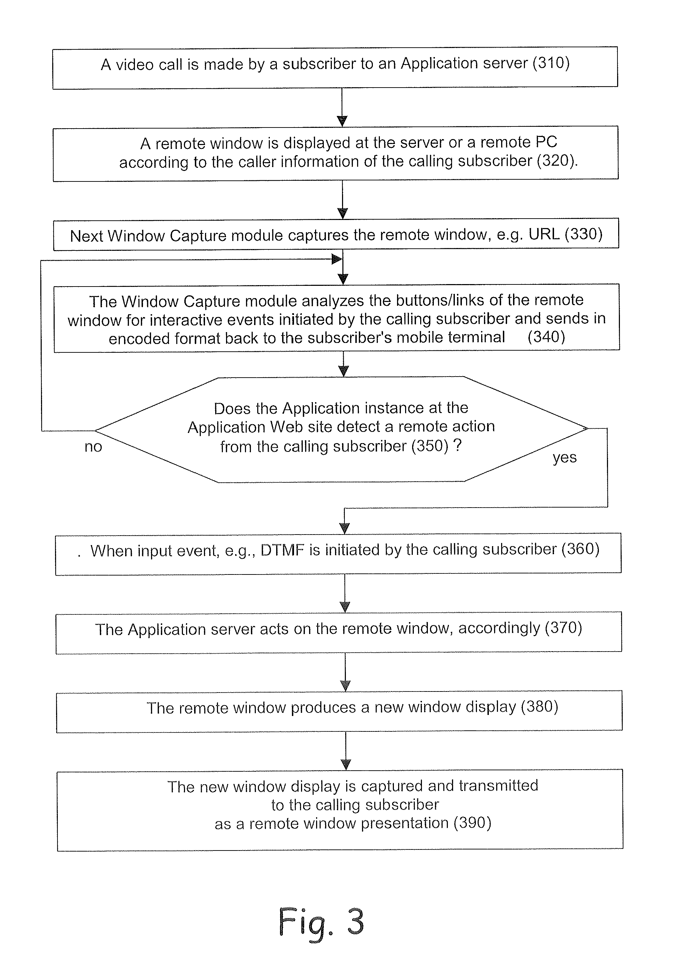

Fig. 3 is a schematic illustration of the logical steps, performed in accordance with the principles of the present invention. An Application server running a remote Application Web site provides real-time remote presentation and control of a visual page from a calling subscriber's mobile terminal during a video call. A video call is made by a subscriber to the
Application server 310 and a remote window is displayed at the server or a remote PC according to the caller information of the calling subscriber 320.

Next, a Window Capture module captures the remote window 330 and the Window Capture module analyzes the buttons/links of the remote window for interactive events initiated by the calling subscriber and sends in an encoded format back to the subscriber's mobile phone 340. An Application instance at the Application Web site waits for a remote action from the calling subscriber 350 and when an input event, e.g., DTMF, is initiated by the calling subscriber 360 the Application server acts on the remote window, accordingly 370, such that the remote window produces a new window display 380, which is captured and transmitted to the calling subscriber as a remote window presentation 390.

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

## Claims

1. A method for an Application server at a remote window source to provide real-time remote presentation and control of a visual page from a calling subscriber's mobile terminal during a video call, said method comprising:
performing a video call by the calling subscriber to the Application server;
displaying said remote window at one of a remote server and a remote PC by the server, according to the caller information of the calling subscriber;
capturing said remote window by a Window Capture module in real-time;
analyzing the buttons/links of said remote window by a Window Input and Translate module for an interactive input event initiated by the calling subscriber and sending back to the subscriber's mobile phone in encoded format;
waiting by an Application instance at the remote window source site for said input event by the calling subscriber;
initiating said input event by the calling subscriber;
acting by the Application server on the remote window, accordingly,
such that said remote window produces a new window presentation which is captured and transmitted to the calling subscriber as a remote window presentation.

2. The method of claim 1, wherein said remote window source is an Application Web site.

3. The method of claim 1, wherein said window is a URL window.

4. The method of claim 1, wherein said window is a Desktop window.

5. The method of any preceding claim, further comprising capturing said window in real time with a speed of 1-30 frames/sec by the application instance for each video call.

6. The method of any preceding claim, wherein said input event is a DTMF event, a voice event, or a camera event.

7. The method of any of claims 1 to 5, wherein said input event is a mobile terminal motion sensors event or a mobile terminal signalling event.

8. A system for an Application server at a remote window source to provide real-time remote presentation of a real-time transaction and control of a visual window source from a calling subscriber's mobile terminal during a video call, said system comprising:
a signaling and control system to coordinate processing of the subscriber's mobile terminal input events corresponding to activities relating to at least one of remote window buttons, links, text input and numbers; and
an event analyzer to analyze said window source buttons, link, text, numbers matched with input events from the subscriber's mobile terminal,
such that said remote window source produces a new window presentation which is captured and transmitted to the calling subscriber as a remote window presentation in real time and at 1-30 frames / sec.

9. The system of claim 8, wherein said remote window source is an Application Web site, a URL window or a Desktop window.

10. The system of claim 8 or 9, further comprising means for capturing said window source in real time with a speed of 1-30 frames/sec by the application instance for each video call.

11. The system of claim 10, further comprising means for encapsulating said captured window source in real time and sending to the subscriber endpoint terminal during the video call.

12. The system of any of claims 8 to 11, wherein said input events are DTMF entries, Voice entries or Camera event entries.

13. The system of any of claims 8 to 11, wherein said input events are mobile terminal motion sensors.

14. The system of any of claims 8 to 11, wherein said input events are involve money transactions.

15. The system of claim 14, wherein said money transactions are at least one of Forex transactions, put and call transactions, short and long transactions, options, shares, betting transactions, auctions, electronic products, digital products and commodities.
